# DEMANDE DE BREVET EUROPEEN

(11) **EP 4 113 807 A1**
(43) Date de publication de la demande: **04.01.2023**
(21) Numéro de dépôt: 22181425.4
(22) Date de dépôt: 28.06.2022
(51) Int. Cl.: H02M 1/00, H02M 5/14, H02J 1/14, H02J 3/26

(54) **SYSTÈME D'ALIMENTATION ÉLECTRIQUE**

(30) Priorité: 29.06.2021 FR 2106986
(71) Demandeur: Schneider Electric Industries SAS, 92500 Rueil-Malmaison (FR)
(72) Inventeur: MEYSENC, Luc, 38710 MENS (FR); BRUN, Eric, 38360 SASSENAGE (FR)
(74) Mandataire: Lavoix

(57) **Abrégé**

L'invention concerne un système d'alimentation électrique, adapté à alimenter une pluralité de charges (8A, 8B, 8C) distinctes à partir d'une source alternative (4), comportant au moins deux transformateurs électriques (6A, 6B, 6C) monophasés ou polyphasés, comportant chacun un circuit d'induction primaire et un circuit d'induction secondaire. Les circuits d'induction primaires (14A, 14B, 14C) sont connectés en série formant une succession de transformateurs. Pour chacun des transformateurs, le circuit d'induction secondaire (16A, 16B, 16C) comporte au moins deux groupes d'enroulements secondaires, chaque groupe d'enroulements secondaires ayant au moins un groupe de bornes de sortie. Un des groupes de bornes de sortie est connecté à au moins une des charges à alimenter, et un autre des groupes de bornes de sortie est connecté à un des groupes de bornes de sortie d'un autre transformateur dans la succession de transformateurs, de manière à réaliser une connexion en parallèle des circuits d'induction secondaires.

## Description

La présente invention concerne un système d'alimentation électrique adapté à alimenter une pluralité de charges distinctes.

L'invention se situe dans le domaine de l'alimentation électrique et trouve des applications notamment dans l'alimentation en électricité de centres de stockage électronique de données (en anglais « data centers ») ou de fermes de calcul, qui sont des systèmes consommateurs de forte puissance.

L'invention trouve également des applications dans des systèmes de distribution d'énergie électrique de plus faible puissance, tels que l'alimentation des objets connectés (loT).

La fourniture d'électricité pour des installations comportant un grand nombre de charges qui consomment fortement pose des problèmes. C'est par exemple le cas d'un centre de stockage de données numériques et/ou de calcul, qui comporte un grand nombre de dispositifs de stockage et de calcul (e.g. des cartes électroniques), comportant des mémoires électroniques et des processeurs de calculs, ces dispositifs étant organisés par lots (en anglais « racks »), chaque lot pouvant comporter plusieurs milliers de dispositifs de stockage et de calcul et étant susceptible de consommer de l'ordre de 5 à 50 kW par rack. Ainsi, la puissance électrique totale à fournir peut excéder 100 MW. Dans cet exemple les charges qui sont des cartes électroniques doivent être alimentées en courant continu, alors que la source de courant électrique (e.g. le réseau de distribution d'électricité) fournit un courant alternatif, donc des systèmes de conversion, e.g. transformateurs et convertisseurs, sont nécessaires. La fourniture d'électricité pose des problèmes dans une telle application, pour des raisons de longueur de câble de transport de l'électricité, d'un grand nombre de trains de puissance, une architecture complexe intégrant plusieurs étages de transformateurs/convertisseurs et de commutateurs pour assurer une distribution d'électricité à courant continu à partir d'une source de courant alternatif, qui soit fiable et sécurisée.

De problèmes similaires se posent pour la fourniture d'électricité pour d'autres installations industrielles comportant de nombreuses charges susceptibles de consommer une grande puissance électrique.

Un des objectifs de l'invention est de proposer un système d'alimentation électrique d'architecture simplifiée par rapport aux systèmes connus, permettant ainsi d'économiser des ressources.

A cet effet, l'invention propose, un système d'alimentation électrique adapté à alimenter une pluralité de charges distinctes à partir d'une source d'alimentation d'énergie électrique alternative, comportant au moins deux transformateurs électriques monophasés ou polyphasés, chaque transformateur électrique comportant un circuit d'induction primaire, comportant un groupe d'enroulements primaires, et un circuit d'induction secondaire, comportant au moins un groupe d'enroulements secondaires. Les circuits d'induction primaires transformateurs sont connectés en série formant une succession de transformateurs. Pour chacun des transformateurs, le circuit d'induction secondaire comporte au moins deux groupes d'enroulements secondaires, chaque groupe d'enroulements secondaires ayant au moins un groupe de bornes de sortie, chaque groupe de bornes étant composé d'une borne par phase. Un desdits groupes de bornes de sortie est connecté à au moins une des charges à alimenter, et un autre desdits groupes de bornes de sortie est connecté à un des groupes de bornes de sortie d'un autre transformateur dans la succession de transformateurs, de manière à réaliser une connexion en parallèle des circuits d'induction secondaires.

Avantageusement, le système proposé permet de distribuer l'électricité à une pluralité de charges, avec une architecture simplifiée et modulaire, les charges pouvant être dispersées sur une grande étendue.

Avantageusement, grâce à l'architecture de système proposée, les circuits d'induction secondaires des transformateurs sont connectés de façon spécifique, ce qui permet un équilibrage des tensions et courants en entrée et en sortie des transformateurs, indépendamment de la puissance consommée par les charges alimentées sur chaque transformateur.

Le système d'alimentation électrique selon l'invention peut également présenter une ou plusieurs des caractéristiques ci-dessous, prises indépendamment ou selon toutes les combinaisons techniquement envisageables.

Pour chaque transformateur, chaque groupe d'enroulements secondaires comporte des enroulements de même sens d'enroulement.

Le système comporte des transformateurs électriques polyphasés, et pour chaque transformateur, le circuit d'induction primaire comporte un groupe d'enroulements primaires comportant au moins un enroulement primaire par phase, et lesdits enroulements primaires sont connectés en série par phase.

Le système comporte des transformateurs électriques polyphasés, les connexions de groupes de bornes sont effectuées selon un mode de connexion polyphasée choisi parmi une connexion en étoile, ou polygonale ou une combinaison de ces modes de connexion.

Pour chaque transformateur, le circuit d'induction secondaire comporte un groupe d'enroulements principaux connectés à une charge à alimenter, et un groupe d'enroulements auxiliaires comportant un groupe de bornes d'entrée et un groupe de bornes de sortie, et les bornes du groupe de bornes d'entrée de chaque circuit d'induction secondaire sont connectées en parallèle, et les bornes du groupe de bornes de sortie de chaque circuit d'induction secondaire sont connectées en parallèle.

Les bornes du groupe de bornes d'entrée de chaque circuit d'induction secondaire sont connectées, par phase, à un même groupe de conducteurs, et les bornes du groupe de bornes de sortie de chaque circuit d'induction secondaire sont connectées, par phase, à un même groupe de conducteurs.

Pour chaque transformateur, le circuit d'induction secondaire comprend un groupe d'enroulements principaux connecté à une charge à alimenter, et un groupe d'enroulements auxiliaires, chaque groupe d'enroulements ayant un groupe de bornes d'entrée et un groupe de bornes de sortie, chaque borne du groupe de bornes d'entrée d'un groupe d'enroulements auxiliaires étant connectée, par phase, à une borne du groupe de bornes d'entrée du groupe d'enroulements principaux du circuit d'induction secondaire d'un transformateur suivant ou précédent de la succession de transformateurs, et chaque borne du groupe de bornes de sortie d'un groupe d'enroulements auxiliaires étant connectée, par phase, à une borne du groupe de bornes de sortie dudit groupe d'enroulements principaux.

Le système comporte au moins trois transformateurs électriques, chaque transformateur électrique comportant un circuit d'induction secondaire comportant au moins trois groupes d'enroulements secondaires, comportant un groupe d'enroulements principaux connectés à une charge à alimenter, et deux groupes d'enroulements auxiliaires, chaque groupe d'enroulements auxiliaires ayant un groupe de bornes d'entrée et un groupe de bornes de sortie, et un premier groupe d'enroulements auxiliaires d'un circuit d'induction secondaire d'un transformateur est connecté en parallèle, via lesdits groupes de bornes d'entrée et de sortie, à un groupe d'enroulements principaux d'un transformateur suivant ou précédent de la succession de transformateurs.

Pour un transformateur considéré d'indice n de la succession de transformateurs, le groupe de bornes de sortie du premier groupe d'enroulements auxiliaires est connecté au groupe de bornes de sortie du groupe d'enroulements principaux d'un transformateur d'indice n+1 dans la succession de transformateurs, et le groupe de bornes de sortie du deuxième groupe d'enroulements auxiliaires est connecté au groupe de bornes de sortie d'un deuxième groupe d'enroulements auxiliaires d'un transformateur d'indice n+2 dans la succession de transformateurs.

Le système comporte en outre un convertisseur alternatif/continu connecté entre un groupe d'enroulements secondaires et une charge à alimenter.

D'autres caractéristiques et avantages de l'invention ressortiront de la description qui en est donnée ci-dessous, à titre indicatif et nullement limitatif, en référence aux figures annexées, parmi lesquelles :
La figure 1 est une architecture générique d'un système d'alimentation électrique selon l'invention ;
La figure 2 est une représentation schématique d'un premier mode de réalisation d'un système d'alimentation électrique ;
La figure 3 est une représentation schématique d'un deuxième mode de réalisation d'un système d'alimentation électrique ;
La figure 4 est une représentation schématique d'une variante du deuxième mode de réalisation d'un système d'alimentation électrique ;
La figure 5 est une représentation schématique d'un troisième mode de réalisation d'un système d'alimentation électrique.

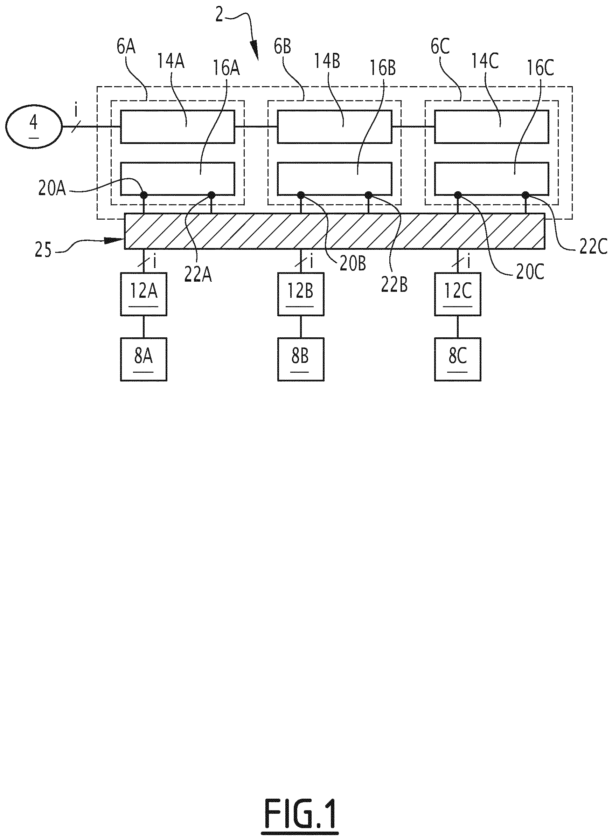

La **figure 1** représente schématiquement une architecture générique d'un système d'alimentation tel que proposé.

Le système d'alimentation 2 est connecté à une source d'alimentation électrique 4 (ou source d'énergie électrique), par exemple un réseau de distribution polyphasé, généralement triphasé, fournissant trois phases de tension ou, selon une variante un réseau de distribution monophasé.

Pour simplifier la représentation et sans perte de généralité, les figures illustrent schématiquement des connexions à un fil avec une indication d'un nombre i de phases, i supérieur ou égal à 1, pour représenter à la fois des connexions monophasées (i=1) ou polyphasées (i>1).

Dans l'exemple illustré schématiquement, le système 2 comporte trois transformateurs électriques, référencés respectivement 6A, 6B, 6C, configurés pour délivrer de l'énergie à trois charges distinctes 8A, 8B, 8C.

Chaque transformateur électrique est de manière connue adapté pour modifier les valeurs de tension et d'intensité de courant délivrées par une source d'énergie électrique alternative en valeurs de tension et de courant différentes, de même fréquence, celle du réseau de distribution, et de même forme.

Dans l'exemple de la figure 1, chaque charge 8A, 8B, 8C est connectée à un convertisseur alternatif/continu (également appelé redresseur) 12A, 12B, 12C, adapté pour transformer une tension alternative en tension continue.

Chaque transformateur électrique 6A, 6B, 6C comporte un circuit d'induction primaire 14A, 14B, 14C et un circuit d'induction secondaire 16A, 16B, 16C (monophasé ou polyphasé, par exemple triphasé).

Chaque circuit d'induction primaire comporte, de manière connue, un groupe d'enroulements primaires, comportant un ou plusieurs enroulements par phase, ou bobines électriques d'induction, constituées d'un fil conducteur enroulé autour d'un noyau magnétique.

Les circuits d'induction primaire 14A, 14B, 14C sont connectés en série sur chacune des phases dans le cas polyphasé, (en anglais « daisy chain ») formant ainsi un circuit électrique, connecté à la source d'alimentation électrique 4.

Les transformateurs électriques connectés en série par les circuits d'induction primaires forment une succession de transformateurs, comportant respectivement dans l'exemple un premier transformateur 6A, un deuxième transformateur 6B et un troisième transformateur 6C.

Bien entendu, le nombre de transformateurs électriques n'est pas limité à trois, d'une manière générale un système d'alimentation électrique 2 comporte un nombre N de transformateurs électriques, N étant un nombre entier positif supérieur ou égal à deux.

Chaque circuit d'induction secondaire 16A, 16B, 16C comporte au moins deux groupes d'enroulements secondaires (non représentés sur la figure 1), selon divers modes de réalisation décrits plus en détail ci-après. Chaque groupe d'enroulements secondaires comprend au moins un enroulement (ou bobinage) par phase.

Chaque circuit d'induction secondaire 16A, 16B, 16C comporte au moins deux groupes de bornes de connexion 20A, 22A ; 20B, 22B ; 20C, 22C. Chaque groupe de bornes de connexion comporte une borne par polarité de phase.

Au moins un groupe de bornes de connexion 20A, 20B, 20C de chaque transformateur 6A, 6B, 6C est connecté à une charge 8A, 8B, 8C correspondante, via le convertisseur alternatif/continu 12A, 12B, 12C correspondant.

De plus, un système d'interconnexion 25 est mis en oeuvre, permettant de réaliser, via les connexions entre groupes de bornes de connexion des circuits d'induction secondaires, une connexion en parallèle entre circuits d'induction secondaires d'au moins deux transformateurs de la succession des transformateurs.

Plusieurs modes de réalisation du système d'interconnexion 25 sont décrits ci-après.

Avantageusement, la connexion en parallèle des circuits d'induction secondaires des transformateurs électriques permet de réaliser un équilibrage des tensions fournies en sortie par ces transformateurs électriques, indépendamment de la consommation des charges électriques 8A, 8B, 8C alimentées via les convertisseurs 12A, 12B, 12C, les charges n'étant pas nécessairement interconnectées directement entre elles.

Plusieurs modes de réalisation sont décrits ci-après.

De plus, comme il sera expliqué ci-après en référence aux modes de réalisation, chaque circuit d'induction secondaire comporte P groupes d'enroulements, P étant supérieur ou égal à deux, chaque groupe d'enroulement comportant au moins un enroulement par phase.

Dans la suite de la description, les références qui désignent des éléments déjà décrits en référence à la figure 1 sont conservées.

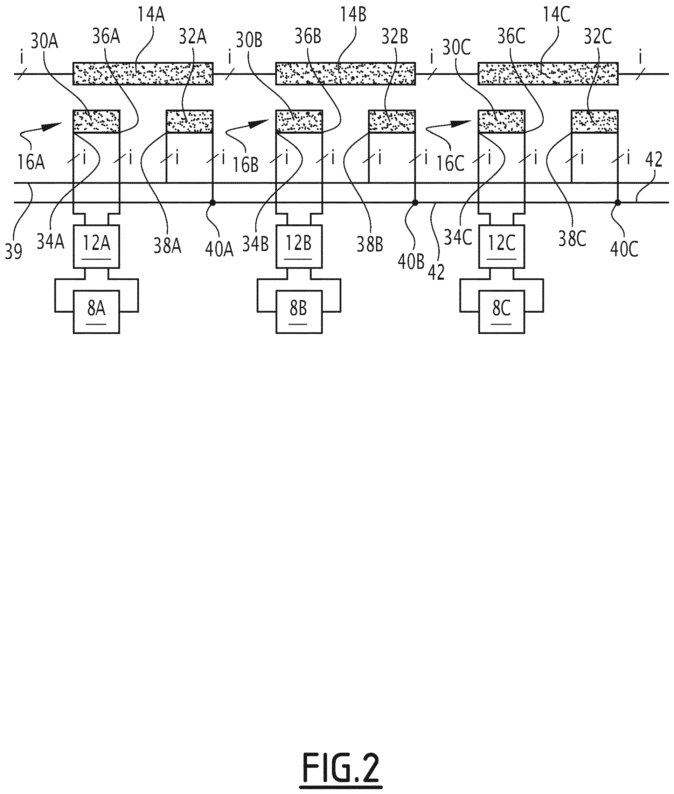

La **figure 2** illustre un premier mode de réalisation d'un système d'alimentation selon l'invention.

Dans ce premier mode de réalisation, chaque circuit d'induction secondaire 16A, 16B, 16C comporte deux groupes d'enroulements secondaires 30A, 32A ; 30B, 32B ; 30C, 32C distincts, chaque groupe comportant au moins un enroulement par phase.

Chaque circuit d'induction secondaire comporte un groupe d'enroulements principaux, connectés à la charge correspondante, et un groupe d'enroulements auxiliaires.

Chacun de ces groupes d'enroulements secondaires étant polyphasé, les connexions sont effectuées selon un mode de connexion polyphasée choisi parmi une connexion en étoile ou en triangle (ou polygonale suivant le nombre de phases), ou en zigzag, ou toute autre combinaison de ces modes de connexion présentant un intérêt pour le dimensionnement de l'installation.

De préférence, dans chaque circuit d'induction secondaire, pour chaque phase, les deux groupes d'enroulements comportent des enroulements de même sens, c'est-à-dire que le fil conducteur est enroulé autour d'un noyau magnétique dans un même sens prédéterminé.

De préférence, tous les enroulements de tous les circuits d'induction secondaires 16A, 16B, 16C du système d'alimentation sont bobinés dans le même sens.

Dans ce mode de réalisation, le premier groupe d'enroulements principaux 30A, 30B, 30C d'un circuit d'induction secondaire comporte un groupe de bornes d'entrée 34A, 34B, 34C et un groupe de bornes de sortie 36A, 36B, 36C connectées à un convertisseur AC/DC 12A, 12B, 12C.

De préférence, chaque enroulement principal, pour chaque phase, est configuré pour diminuer la tension à un niveau compatible avec la tension de la charge, le convertisseur AC/DC et pour maximiser le transfert de puissance à la charge. Le rapport de transformation entre les enroulements primaires du circuit d'induction primaire et les enroulements principaux du circuit d'induction secondaire est choisi en fonction de la tension globale du système d'alimentation 2 et du nombre N de primaires de transformateur en série.

Le deuxième groupe d'enroulements secondaires 32A, 32B, 32C, également appelé groupe d'enroulements auxiliaires, d'un circuit d'induction secondaire 16A, 16B, 16C, comporte un groupe de bornes d'entrée 38A, 38B, 38C connectées a un point commun (représenté schématiquement sur la figure par un groupe de conducteurs 39), et un groupe de bornes de sortie 40A, 40B, 40C, connectées à un groupe de conducteurs 42. Il est entendu que dans le cas polyphasé (i>1), chaque conducteur 39, 42 est un groupe de conducteurs formé en fait d'un conducteur par phase. Par exemple, les bornes correspondant à une même phase sont connectées à un même conducteur, réalisant ainsi une connexion en parallèle.

Ainsi, dans ce mode de réalisation, les bornes du groupe de bornes de sortie 40A, 40B, 40C des circuits d'induction secondaires sont toutes connectées en parallèle, ce qui permet de garantir l'équilibrage des tensions par les inductances mutuelles entre l'ensemble des enroulements primaire et secondaires sur une même phase de chacun des transformateurs. A l'approximation près des chutes de tension dans les inductances parasites et dans les câbles, les tensions de tous les enroulements du système d'alimentation se trouvent couplées par un rapport constant correspondant au nombre de spires de chacun des enroulements : primaires, secondaires principaux et secondaires auxiliaires.

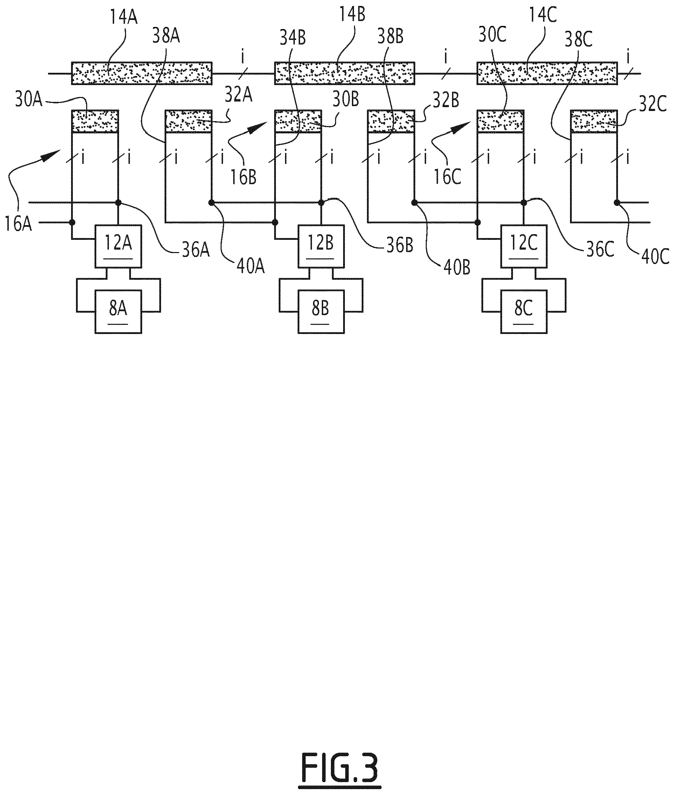

La **figure 3** illustre un deuxième mode de réalisation d'un système d'alimentation selon l'invention.

Dans ce deuxième mode de réalisation, comme dans le premier mode de réalisation décrit en référence à la figure 2, chaque circuit d'induction secondaire 16A, 16B, 16C comporte deux groupes d'enroulements 30A, 32A ; 30B, 32B ; 30C, 32C distincts, respectivement un groupe d'enroulements principaux 30A, 30B, 30C et un groupe d'enroulements auxiliaires 32A, 32B, 32C.

Dans ce deuxième mode de réalisation, chaque deuxième groupe d'enroulements auxiliaires 32A, 32B, 32C, comporte un groupe de bornes d'entrée 38A, 38B, 38C et un groupe de bornes de sortie 40A, 40B, 40C, connectées respectivement à un point commun avec les groupes de bornes 34B, 34C, 34A et 36B, 36C, 36A, du groupe d'enroulements principaux du transformateur suivant dans la succession de transformateurs.

Par exemple, le groupe de bornes 38A du deuxième groupe d'enroulements auxiliaires 32A, du circuit d'induction secondaire 16A, est connecté, via un mode de connexion polyphasée choisi, au groupe de bornes 34B du groupe d'enroulements principaux 30B du circuit d'induction secondaire 16B; et le groupe de bornes de sortie 40A du deuxième groupe d'enroulements auxiliaires 32A, du circuit d'induction secondaire 16A, est connecté, via un mode de connexion polyphasée choisi, au groupe de bornes de sortie 36B du groupe d'enroulements principaux 30B du circuit d'induction secondaire 16B.

Ainsi, par la connexion des enroulements secondaires auxiliaires aux enroulements secondaires principaux d'autres transformateurs, de proche en proche, tous étant connectés, une connexion en parallèle entre toutes les sorties de circuits d'induction secondaires 16A, 16B, 16C (d'une même phase) est réalisé et ce pour un fonctionnement similaire à ce qui a été décrit pour le premier mode de réalisation.

Le nombre de groupes d'enroulements du circuit d'induction secondaire de chaque transformateur n'est pas limité à 2, il peut être généralisé à P, P étant un entier positif supérieur à 2, selon les besoins, le nombre N de transformateurs du système étant également supérieur ou égal à P dans ce cas.

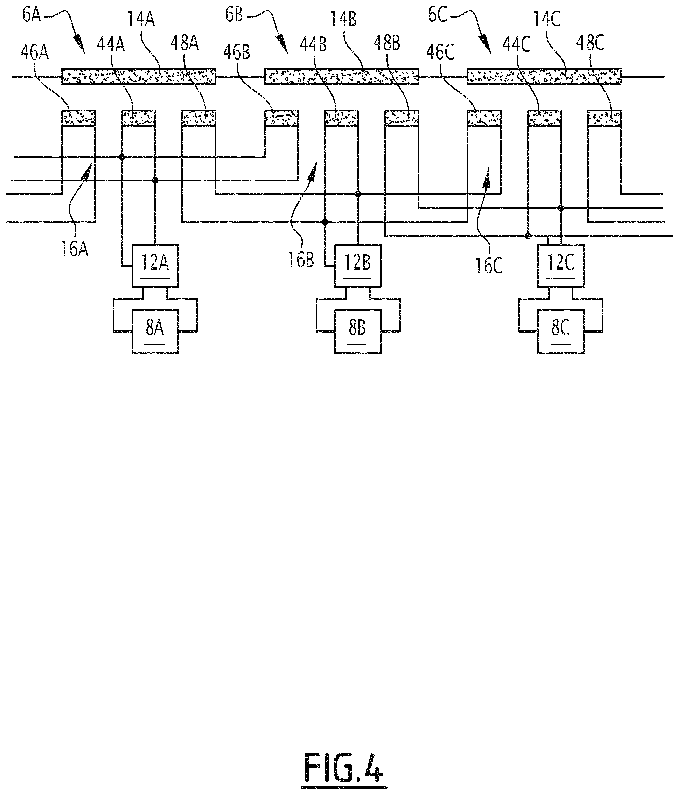

Par exemple, la **figure 4** illustre une variante du deuxième mode de réalisation décrit ci-dessus, dans laquelle chaque circuit d'induction secondaire comporte trois groupes d'enroulements, respectivement un groupe d'enroulements principaux 44A, 44B, 44C connectés à la charge, et deux groupes d'enroulements auxiliaires 46A, 48A ; 46B, 48B ; 46C, 48C.

Les connexions sont également envisagées pour i phases, avec i supérieur ou égal à 1 comme dans les exemples des figures 2 et 3, cette précision n'ayant pas été introduite dans la figure 4 afin de faciliter la lecture de cette figure.

Pour un circuit d'induction secondaire 16B d'un transformateur 6B, un groupe de bornes de sortie d'un premier groupe d'enroulements auxiliaires 46B est connecté, par un mode de connexion polyphasée choisi, à un groupe de bornes de sortie du groupe d'enroulements principaux 44A du transformateur 6A précédent, et un groupe de bornes de sortie d'un deuxième groupe d'enroulements auxiliaires 48B est connecté à un groupe de bornes de sortie du groupe d'enroulements principaux 44C du transformateur 6C suivant.

Bien entendu, le mode de réalisation décrit ci-dessus est généralisable à un nombre supérieur de groupes d'enroulements auxiliaires.

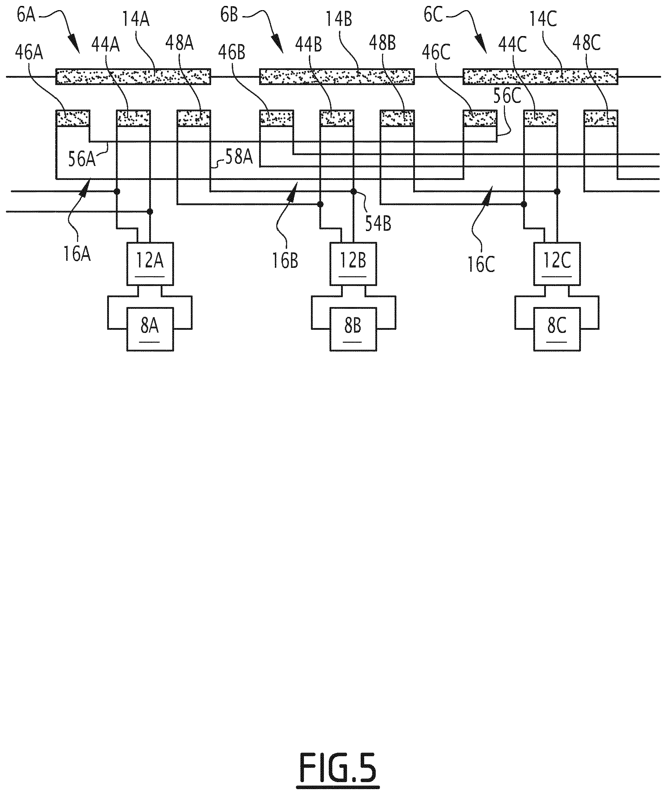

La **figure 5** illustre un troisième mode de réalisation d'un système d'alimentation selon l'invention, qui combine le premier mode de réalisation et le deuxième mode de réalisation.

Les connexions sont également envisagées pour i phases, avec i supérieur ou égal à 1 comme dans les exemples des figures 2 et 3, cette précision n'ayant pas été introduite dans la figure afin de faciliter la lecture de la figure.

Dans ce troisième mode de réalisation illustré à la figure 5, chaque circuit d'induction secondaire 16A, 16B, 16C comporte trois groupes d'enroulements, respectivement un groupe d'enroulements principaux 44A, 44B, 44C connectés à la charge, et deux groupes d'enroulements auxiliaires 46A, 48A ; 46B, 48B ; 46C, 48C.

Un groupe de bornes de sortie 54B d'un groupe d'enroulements principaux 44B est connecté, via un mode de connexion polyphasée choisi, à la charge correspondante, ainsi qu'à un groupe de bornes de sortie 58A d'un premier groupe d'enroulements auxiliaires 48A d'un circuit d'induction secondaire 16A d'un transformateur précédent 6A dans la succession de transformateurs.

Un groupe de bornes de sortie 56A d'un deuxième groupe d'enroulements auxiliaires 46A d'un circuit d'induction secondaire 16A d'un premier transformateur 6A considéré dans la succession de transformateurs, est connecté à un groupe de bornes 56C d'un deuxième groupe d'enroulements auxiliaires 46C d'un circuit d'induction secondaire 16C d'un troisième transformateur 6C considéré dans la succession de transformateurs.

Seuls trois transformateurs 6A, 6B, 6C sont illustrés sur la figure 5 pour la lisibilité de la figure. Il est entendu qu'un nombre plus grand de transformateurs peut faire partie d'un système 2, et que dans ce cas, les connexions illustrées s'appliquent avec des transformateurs d'indices n, n+1 et n+2 successifs.

Ainsi, un groupe de bornes de sortie 54ₙ₊₁ d'un groupe d'enroulements principaux d'un transformateur 6ₙ₊₁ est connecté à la charge correspondante, ainsi qu'à un groupe de bornes de sortie 58ₙ d'un premier groupe d'enroulements auxiliaires d'un circuit d'induction secondaire 16ₙ d'un transformateur précédent 6ₙ dans la succession de transformateurs. En d'autres termes, un groupe de bornes de sortie 58ₙ d'un premier groupe d'enroulements auxiliaires d'un circuit d'induction secondaire 16ₙ d'un transformateur est connecté à au groupe d'enroulements principaux d'un transformateur suivant 6ₙ₊₁.

De même, un groupe de bornes de sortie 56ₙ d'un deuxième groupe d'enroulements auxiliaires 46ₙ d'un circuit d'induction secondaire 16ₙ d'un transformateur 6ₙ considéré dans la succession de transformateurs, est connecté à un groupe de bornes 56ₙ₊₂ d'un deuxième groupe d'enroulements auxiliaires 46ₙ₊₂ d'un circuit d'induction secondaire 16ₙ₊₂ d'un transformateur 6ₙ₊₂ considéré dans la succession de transformateurs.

Ce troisième mode de réalisation est d'architecture plus complexe mais combine les avantages en termes de dimensionnement des enroulements des deux premiers modes de réalisation.

D'autres modes de réalisation sont envisageables, dans lesquels un groupe de bornes de connexion d'un groupe d'enroulements auxiliaires d'un transformateur d'indice n est connecté à un groupe de bornes de connexion d'un groupe d'enroulements principaux ou auxiliaires d'un autre transformateur de la succession, d'indice n+q, avec q>1 par exemple. Ainsi, des systèmes de connexion plus complexes sont envisageables, sur le principe de connexion exposés dans les exemples ci-dessus.

Par exemple, dans un cas où chaque circuit d'induction secondaire comporte P groupes d'enroulements secondaires, i.e. un groupe d'enroulements principaux et P-1 groupes d'enroulements auxiliaires, il est envisageable de considérer des connexions, via les groupes de bornes respectifs de la manière suivante : considérant un transformateur d'indice n de la succession de transformateurs, le premier groupe d'enroulements auxiliaires est connecté au groupe d'enroulements principaux d'un transformateur d'indice n+1, le deuxième groupe d'enroulements auxiliaires est connecté à un groupe d'enroulements auxiliaires d'un transformateur d'indice n+2, et le P-1 groupe d'enroulements auxiliaires est connecté à un groupe d'enroulements auxiliaires d'un transformateur d'indice n+P-1.

## Revendications

1. Système d'alimentation électrique, adapté à alimenter une pluralité de charges (8A, 8B, 8C) distinctes à partir d'une source d'alimentation d'énergie électrique alternative (4), comportant au moins deux transformateurs électriques (6A, 6B, 6C) monophasés ou polyphasés, chaque transformateur électrique (6A, 6B, 6C) comportant un circuit d'induction primaire (14A, 14B, 14C) comportant un groupe d'enroulements primaires, et un circuit d'induction secondaire (16A, 16B, 16C) comportant au moins un groupe d'enroulements secondaires,
**caractérisé en ce que** les circuits d'induction primaires (14A, 14B, 14C) desdits transformateurs sont connectés en série formant une succession de transformateurs,
et **en ce que**, pour chacun des transformateurs (6A, 6B, 6C), le circuit d'induction secondaire (16A, 16B, 16C) comporte au moins deux groupes d'enroulements secondaires (30A, 32A ; 30B, 32B ; 30C, 32C ; 44A, 46A, 48A ; 44B, 46B, 48B ; 44C, 46C, 48C ; 56A, 58A ; 54B ; 56C), chaque groupe d'enroulements secondaires ayant au moins un groupe de bornes de sortie (36A, 40A ; 36B, 40B ; 36C, 40C), chaque groupe de bornes étant composé d'une borne par phase, et dans lequel un desdits groupes de bornes de sortie (36A, 36B, 36C ; 54B) est connecté à au moins une des charges (8A, 8B, 8C) à alimenter, et un autre desdits groupes de bornes de sortie (40A, 40B ; 56A, 58A) est connecté à un des groupes de bornes de sortie (40B, 40C ; 36B ; 36C ; 56C ; 54B) d'un autre transformateur dans la succession de transformateurs, de manière à réaliser une connexion en parallèle des circuits d'induction secondaires (16A, 16B, 16C).

2. Système selon la revendication 1 dans lequel, pour chaque transformateur (6A, 6B, 6C), chaque groupe d'enroulements secondaires comporte des enroulements de même sens d'enroulement.

3. Système selon l'une des revendications 1 ou 2, comportant des transformateurs électriques (6A, 6B, 6C) polyphasés, dans lequel pour chaque transformateur, le circuit d'induction primaire comporte un groupe d'enroulements primaires comportant au moins un enroulement primaire par phase, et lesdits enroulements primaires sont connectés en série par phase.

4. Système selon l'une des revendications 1 à 3, comportant des transformateurs électriques (6A, 6B, 6C) polyphasés, dans lequel lesdites connexions de groupes de bornes sont effectuées selon un mode de connexion polyphasée choisi parmi une connexion en étoile, ou polygonale ou une combinaison de ces modes de connexion.

5. Système selon l'une des revendications 1 à 4, dans lequel, pour chaque transformateur (6A, 6B, 6C), le circuit d'induction secondaire (16A, 16B, 16C) comporte un groupe d'enroulements principaux (30A, 30B, 30C) connectés à une charge (8A, 8B, 8C) à alimenter, et un groupe d'enroulements auxiliaires (32A, 32B, 32C) comportant un groupe de bornes d'entrée (38A, 38B, 38C) et un groupe de bornes de sortie (40A, 40B, 40C), et dans lequel les bornes du groupe de bornes d'entrée de chaque circuit d'induction secondaire sont connectées en parallèle, et les bornes du groupe de bornes de sortie de chaque circuit d'induction secondaire sont connectées en parallèle.

6. Système selon la revendication 5, dans lequel les bornes du groupe de bornes d'entrée (38A, 38B, 38C) de chaque circuit d'induction secondaire (16A, 16B, 16C) sont connectées, par phase, à un même groupe de conducteurs (39), et les bornes du groupe de bornes de sortie (40A, 40B, 40C) de chaque circuit d'induction secondaire (16A, 16B, 16C) sont connectées, par phase, à un même groupe de conducteurs (42).

7. Système selon l'une des revendications 1 à 4 dans lequel, pour chaque transformateur (6A, 6B, 6C), le circuit d'induction secondaire (16A, 16B, 16C) comprend un groupe d'enroulements principaux (30A, 30B, 30C) connecté à une charge (8A, 8B, 8C) à alimenter, et un groupe d'enroulements auxiliaires (32A, 32B, 32C), chaque groupe d'enroulements ayant un groupe de bornes d'entrée et un groupe de bornes de sortie, chaque borne du groupe de bornes d'entrée (38A, 38B, 38C) d'un groupe d'enroulements auxiliaires (32A, 32B, 32C) étant connectée, par phase, à une borne du groupe de bornes d'entrée (34B, 34C, 34A) du groupe d'enroulements principaux (30B, 30C, 30A) du circuit d'induction secondaire (16A, 16B, 16C) d'un transformateur suivant ou précédent de la succession de transformateurs, et chaque borne du groupe de bornes de sortie (40A, 40B, 40C) d'un groupe d'enroulements auxiliaires (32A, 32B, 32C) étant connectée, par phase, à une borne du groupe de bornes de sortie (36B, 36C, 36A) dudit groupe d'enroulements principaux (30B, 30C, 30A).

8. Système selon l'une des revendications 1 à 4, le système comportant au moins trois transformateurs (6A, 6B, 6C) électriques, dans lequel chaque transformateur électrique (6A, 6B, 6C) comporte un circuit d'induction secondaire (16A, 16B, 16C) comportant au moins trois groupes d'enroulements secondaires (44A, 46A, 48A ; 44B, 46B, 48B ; 44C, 46C, 48C), comportant un groupe d'enroulements principaux (44A, 44B, 44C) connectés à une charge (8A, 8B, 8C) à alimenter, et deux groupes d'enroulements auxiliaires (46A, 48A ; 46B, 48B ; 46C, 48C), chaque groupe d'enroulements auxiliaires ayant un groupe de bornes d'entrée et un groupe de bornes de sortie, et dans lequel, un premier groupe d'enroulements auxiliaires d'un circuit d'induction secondaire d'un transformateur est connecté en parallèle, via lesdits groupes de bornes d'entrée et de sortie, à un groupe d'enroulements principaux d'un transformateur suivant ou précédent de la succession de transformateurs.

9. Système selon la revendication 8, dans lequel, pour un transformateur considéré d'indice n de la succession de transformateurs, le groupe de bornes de sortie du premier groupe d'enroulements auxiliaires est connecté au groupe de bornes de sortie du groupe d'enroulements principaux d'un transformateur d'indice n+1 dans la succession de transformateurs, et le groupe de bornes de sortie du deuxième groupe d'enroulements auxiliaires est connecté au groupe de bornes de sortie d'un deuxième groupe d'enroulements auxiliaires d'un transformateur d'indice n+2 dans la succession de transformateurs.

10. Système selon l'une quelconque des revendications 1 à 9, comportant en outre un convertisseur (12A, 12B, 12C) alternatif/continu connecté entre un groupe d'enroulements secondaires et une charge (8A, 8B, 8C) à alimenter.
